# EUROPÄISCHE PATENTSCHRIFT

(11) **EP 0 656 271 B1**
(45) Veröffentlichungstag und Bekanntmachung des Hinweises auf die Patenterteilung: **11.03.1998**
(21) Anmeldenummer: 94109929.3
(22) Anmeldetag: 28.06.1994
(51) Int. Cl.: B60G 7/02, F16F 1/387

(54) **Gelenklager, insbesondere für einen Achslenker eines Kraftfahrzeugs**
Pivot, especially for a steering rod of a motor vehicle
Pivot, en particulier pour un guide d'essieu d'un véhicule à moteur

(30) Priorität: 05.07.1993 DE 4322304
(43) Veröffentlichungstag der Anmeldung: 07.06.1995
(73) Patentinhaber: Jörn GmbH, D-70736 Fellbach (DE)
(72) Erfinder: Zawadzki, Bernd, Dipl.-Ing., D-71404 Korb (DE)
(74) Vertreter: Neubauer, Hans-Jürgen, Dipl.-Phys.

(56) Entgegenhaltungen:
- EP-A- 0 186 315
- EP-A- 0 317 727
- EP-A- 0 506 053
- DE-A- 1 964 633
- DE-A- 2 365 798
- DE-C- 4 127 092

## Beschreibung

Die Erfindung betrifft ein Gelenklager, insbesondere für einen Achslenker eines Kraftfahrzeugs, nach dem Oberbegriff des Anspruchs 1. Ein solches Gelenklager ist aus der Schrift DE-C-4 127 092 bekannt.

Ein bekanntes Gelenklager (DE-PS 23 37 872) enthält eine zylindrische Gelenkbuchse, die aus einen Innenrohr oder Lagerbolzen und aus einem Außenrohr mit einer dazwischen festhaftend einvulkanisierten Gummischicht besteht. Das Außenrohr hat einen Längsschlitz, der sich mit seiner Schlitztiefe weit in die Gummischicht hinein einstreckt. Die Gelenkbuchse ist unter radialer Vorspannung in ein Aufnahmeauge eingebracht, wobei die Gelenkbuchse mit ihrem im unbelasteten Zustand größeren Durchmesser unter gleichmäßiger Verringerung dieses Durchmessers in das Aufnahmeauge mit einem kleineren Durchmesser eingepreßt worden ist. Dabei hat sich der Längsschlitz geschlossen, so daß im eingepreßten Zustand am Schlitz das Außenrohr, die Gummischicht und eventuelle Zwischenbleche aneinanderliegen und spannungsmäßig praktisch durchlaufend sind. Durch die Vorspannung in der Gummischicht wird eine feste Verbindung zwischen dem Aufnahmeauge und dem Außenrohr der Gelenkbuchse hergestellt.

Das Innenrohr bildet hier das eine zu lagernde Teil und das Aufnahmeauge das andere zu lagernde Teil. Alle Relativbewegungen zwischen diesen beiden Teilen werden molekular in der Gummischicht aufgenommen. Gleitbewegungen erfolgen nicht, so daß auch keine Maßnahmen für stirnseitige Lagerabdichtungen erforderlich sind.

Bei einem solchen Gelenklager werden mit zunehmenden Auslenkungen bzw. Schwenkbewegungen relativ große Rückstellkräfte erzeugt, die das Einfederverhalten eines Fahrzeugs ungünstig beeinflußen können, da im Fahrwerk eine Mehrzahl solcher Gelenklager verwendet werden und sich die Rückstellkräfte pro Lager zu einer großen Gesamt-Rückstellkraft addieren.

Ein bekanntes, gegenüber dem vorstehenden Stand der Technik verdrehweicheres, elastisches Lager (DE-OS 36 01 506), das bevorzugt zur Lagerung eines Fahrerhauses eines LKW verwendet wird, enthält gegenüber dem eingangs gewürdigten Stand der Technik eine relativ kurze Gelenkbuchse. Diese Gelenkbuchse ist ebenfalls mit einem Längsschlitz versehen und wird in ein Aufnahmeauge eingepreßt. Um bei stärkeren Belastungen eine radiale Führung zu erhalten, ist zudem am inneren Lagerteil neben dem Gummiring der Gelenkbuchse ein umlaufender Anschlag als weiterer Gummiring aufvulkanisiert. Dieser ist so bemessen, daß im eingepreßten Zustand der Gelenkbuchse ein umlaufender Luftspalt zwischen Anschlag und umgebendem Aufnahmeauge verbleibt. Bei einem radialen Einfederweg größer als der Luftspalt wirkt der Anschlag und das Lager wird bei größerer, radialer Belastung bei guten Führungseigenschaften härter.

Dieses Lager ist nur an einer Stirnseite durch den vorgespannten Gummiring geschlossen. An der anderen Stirnseite liegt dagegen zwischen dem Anschlag und dem Aufnahmeauge der Luftspalt frei, so daß dort ggfs. Schmutzpartikel eindringen können, die durch Reibung den Lagerverschleiß erhöhen. Bei einer Fahrerhauslagerung liegen diese Lager in einem weniger schmutzgefährdeten Bereich, so daß praktisch keine Schwierigkeiten auftreten; Achslenker eines Fahrzeugs liegen dagegen in einem stark schmutzgefährdeten Bereich unter dem Fahrzeug, so daß der Einsatz eines solchen einseitig offenen Lagers dort nicht zweckmäßig ist.

Es ist weiter ein relativ verdrehweiches Gelenklager für Achslenker mit guten, radialen Führungseigenschaften und beidseitiger stirnseitiger Abdichtung bekannt (DE-PS 41 27 092).

Gegenüber dem eingangs beschriebenen Gelenklager nach der DE-PS 23 37 872 sind hier das Außenrohr und die zugeordnete Gummischicht in der axialen Lagermitte getrennt, dergestalt, daß sich dort ein zylindrischer Zwischenraum ergibt. Dadurch ist ein erstes Außenrohrteil und eine erste Gummischicht als erster Gelenkbuchsenbereich und ein zweites Außenrohrteil und eine zweite Gummischicht als zweiter Gelenkbuchsenbereich gebildet, wobei diese Gelenkbuchsenbereiche zu beiden, axialen Seiten des Gelenklagers hin liegen.

Die Relativbewegungen werden auch hier molekular aufgenommen und das Lager ist im Aufnahmeauge durch die beiden seitlichen, unter Vorspannung stehenden Gummibuchsen gegen Umwelteinflüsse abgedichtet.

Im zylindrischen Zwischenraum ist ein ringförmig umlaufender, mit dem inneren Metallteil verbundener Anschlag angebracht. Der Anschlag ist so bemessen, daß im eingepreßten Zustand gegenüber dem radial angrenzenden Montagerohr ein Luftspalt verbleibt, so daß bei einem radialen Einfederweg größer als der Luftspalt die Anschlagfunktion auftritt und daß zu den axial beidseitig liegenden Gummischichten ebenfalls ein Luftspalt verbleibt. Damit ist bei geringen, radialen Belastungen eine gewünscht weiche Anbindung eines Achslenkers mit großer Verdrehweichheit und geringen Rückstellkräften durchgeführt, wobei aber schon nach relativ wenig radialem Einfederweg eine gewünscht straffe Anbindung mit stark ansteigender Federkennlinie erfolgt.

Zum axialen Einpressen in ein Aufnahmeauge wird ein die Gelenkbuchse umfassendes Montagerohr verwendet, da sich ohne Montagerohr eine Gummischicht eines Gelenkbuchsenbereichs gegen den umlaufenden Anschlag verschieben und abstützen würde, weil das Außenrohr nicht über die gesamte axiale Lagerlänge durchgeht und beim Einpressen das vordere Außenrohrteil entgegen der Einpreßrichtung verschoben werden kann. Die Abstützung einer Gummischicht am Anschlag und die Verschiebung eines Außenblechteils hätte eine vorzeitige Zerstörung der Buchse zur Folge. Das Montagerohr weist, ähnlich wie die Außenrohre, einen Montagerohr-Längsschlitz auf und wird mit in das Aufnahmeauge eingepreßt, wobei sich der Montagerohr-Längsschlitz weitgehend schließt.

Beim Einpreßvorgang legen sich die Außenrohrteile durch die zunehmende, radiale Vorspannung im Gummi am Montagerohr durch Kraftschluß unverschiebbar an, wobei die Relativbewegung zwischen dem mit der Einpreßkraft beaufschlagten Montagerohr und dem Aufnahmeauge erfolgt.

Dieses Lager mit zwei Gelenkbuchsenbereichen und einem dazwischenliegenden Anschlag ist relativ aufwendig und teuer in der Herstellung. In einer Vielzahl von Einsatzfällen sind Zwischenbleche in beiden Gelenkbuchsenbereichen erforderlich, die einerseits relativ teuer sind und andererseits den Fluß bei einer einseitigen Gummieinspritzung behindern können, so daß aufwendige Werkzeuge mit beidseitiger Gummieinspritzung vorzusehen sind. Zudem ist wegen der beiden Gelenkbuchsenbereiche ein relativ großer, axialer Einbauraum erforderlich. Bei Achslenkern soll jedoch der Einbauraum wegen der erforderlichen Freigängigkeit zu den Anbauteilen möglichst klein sein.

Aus der Schrift DE-A-1 964 633 ist eine ringscheibenförmige, elastische Dichtwand aus Gummi mit randseitig umlaufender Dichtlippe bei einem Kraftfahrzeug-Gelenklager bekannt.

Ausgehend von einem Gelenklager nach der DE-C-4 127 092 wird die Aufgabe der Erfindung darin gesehen, ein solches Gelenklager bei einem kleinen, axialen, erforderlichen Einbauraum bei günstiger Herstellmöglichkeit beidseitig abzudichten.

Diese Aufgabe wird mit den kennzeichnenden Merkmalen des Anspruchs 1 gelöst.

Gemäß Anspruch 1 ist eine gegenüber dem Anschlag zur axialen Gelenkbuchsenaußenseite versetzt in einer dritten Radialebene mit dem inneren Metallteil verbundene, ringförmige, elastische Dichtwand aus Gummi mit randseitig umlaufender Dichtlippe angebracht. Ein Montagerohr ist über die axiale Länge der Gelenkbuchse, nämlich das Außenrohr, den Bereich des Anschlags und die Dichtwand gesteckt. Das Montagerohr weist einen Montagerohr-Längsschlitz auf und ist in das Aufnahmeauge mit eingepreßt. Dabei hat sich der im nicht eingepreßten Zustand offene Montagerohr-Längsschlitz beim Einpressen weitgehend geschlossen, wodurch die Gummischicht vorgespannt ist und die Dichtwand dichtend radial eingespannt ist.

Damit wird eine beidseitige Abdichtung an den Stirnseiten erreicht, wobei die eine Seite durch die vorgespannte Gummischicht und die andere Seite durch die Gummidichtwand abgedichtet ist. Die Gummidichtwand ist bereits vor dem Einpressen in das Aufnahmeauge randseitig vom Montagerohr umgeben, so daß sie sich beim Einpreßvorgang, der mit hohen Kräften erfolgt, nicht undefiniert in ihrer Form verändern kann.

Im Gegensatz zur vorgespannten Gummischicht bzw. zum Außenrohr, die am Montagerohr fest und unverdrehbar anliegen, ist der umlaufende Rand der Dichtwand mit seiner Dichtlippe nicht fest und verdrehsicher mit dem Montagerohr verbunden. Es werden daher nur kleine Drehbewegungen molekular ohne Lageveränderung der Dichtlippen gegenüber dem Montagerohr aufgenommen. Bei größeren Drehbewegungen rutscht die Dichtwand gegenüber dem Montagerohr durch und es kann sich wieder eine Lage einstellen, von der ausgehend kleinere Drehbewegungen wieder molekular in der Dichtwand bzw. den Dichtlippen aufgenommen werden. Dadurch hat die Dichtwand im Gegensatz zur vorgespannten Gummischicht eine im gewünschten Sinne nur sehr geringe Rückstellkraft.

Die Herstellung sowohl des Werkzeugs als auch der Gelenkbuchse selbst ist kostengünstig und einfach durchführbar. Das Werkzeug muß lediglich eine einseitige Einspritzmöglichkeit im Bereich der Gummischicht aufweisen. Der Gummifluß kann über Kanäle in den Bereich der Gummidichtwand geführt werden.

Die Gummidichtwand kann mit relativ geringer Wandstärke ausgeführt sein, so daß die axiale Länge des Lagers kurz dimensioniert werden kann, was zu einem günstigen, kurzen Einbauraum für den Achslenkeranschluß führt.

Gemäß Anspruch 2 soll im unbelasteten, noch nicht eingepreßten Zustand der Durchmesser des Außenrohrs und der ringscheibenförmigen Dichtwand etwa gleich groß sein, so daß beide Teile von einem entsprechend dimensionierten Montagerohr vor dem Einpreßvorgang ohne Vorspannung, jedoch anliegend, umfaßt sind.

Vorteilhaft weist die Dichtwand im unbelasteten, noch nicht eingepreßten Zustand im Ringbereich des Gummis eine umlaufende Wölbung zur Lagermitte hin auf. Beim Einpreßvorgang, wenn eine radiale Belastung auf die Dichtwand kommt, wird die Wölbung lediglich größer und es ist sichergestellt, daß keine undefinierte Ausknickung erfolgt.

In einer bevorzugten Ausführungsform nach Anspruch 4 sind am Rand der Dichtwand zwei radial abstehende, axial durch einen umlaufenden Spalt voneinander getrennte Dichtlippen vorgesehen. Die Quererstreckung dieser Dichtlippen kann dabei der Wandstärke der Dichtwand entsprechen. Dadurch ist eine Doppeldichtung mit guter Dichtfunktion geschaffen.

Diese Dichtfunktion wird mit den Merkmalen des Anspruchs 5 weiter verbessert, wobei die erste, zur Lageraußenseite liegende Dichtlippe dicker als die zweite, zur Lagerinnenseite liegende Dichtlippe ist. Die Dichtwand im Bereich der ersten Dichtlippe hat dabei einen etwas kleineren, radialen Durchmesser als im Bereich der zweiten Dichtlippe, so daß die zweite Dichtlippe im unbelasteten, nicht eingepreßten Zustand über die erste Dichtlippe radial vorsteht. Die äußere, stärkere Dichtlippe hat hier eine Stützwirkung und einen mechanischen Schutz für die elastischere, dünne Dichtlippe, die sich gut an den Montagerohr-Innendurchmesser anlegt und mögliche Toleranzen ausgleicht.

Durch die Wirkung des Anschlags bei größerer, radialer Einfederung steigt die radiale Federkennlinie an, wobei sich der Anstieg aus der Dimensionerung des Anschlags ergibt. Der Anschlag könnte beispielsweise als Gummiring aus dem gleichen Gummimaterial sein wie die vorgespannte Gummischicht, wobei der Anschlag in einem Arbeitsgang zusammen mit der Gummischicht ebenfalls auf das innere Metallteil aufvulkanisiert sein könnte.

Um die Härte des Gelenklagers bei radialen Einfederungen weiter zu erhöhen, wird mit Anspruch 6 vorgeschlagen, den Anschlag aus einem gegenüber den Gummischichten härteren Material herzustellen. Dies kann einfach und vorteilhaft gemäß Anspruch 7 dadurch erfolgen, daß der Anschlag als umlaufender, metallischer Anschlagring ein Bestandteil des inneren Metallteils ist. Zweckmäßig wird auf einen solchen, metallischen Anschlagring noch eine Anschlag-Gummischicht aufgebracht.

Für eine variable Dimensionierung der Feder konstanten der Gummischichten bei relativ geringer Lagergröße kann es je nach Anwendungsfall gemäß Anspruch 8 zweckmäßig sein, Metallbleche als Zwischenbleche mit einzuvulkanisieren.

Ein symmetrischer Aufbau nach Anspruch 9 mit gleichen, axialen Längen der vorgespannten Gummischichten und etwa gleicher, axialer Länge des Anschlags hat sich für eine Reihe von Anwendungsfällen als zweckmäßig erwiesen. Die axiale Länge der Gummischicht und des Anschlags können für unterschiedliche Anwendungsfälle zur Anpassung verwendet werden ebenso wie die Breite des Luftspalts.

Im Normalfall werden die Gelenkbuchse und das mit eingepreßte Montagerohr durch die radiale Gummivorspannung fest im Aufnahmeauge gehalten. Eine zusätzliche Sicherungsmaßnahme gegen eine Verschiebung bei hohen axialen Belastungen wird mit Anspruch 10 angegeben. Das Montagerohr wird dazu an seinen beiden stirnseitigen Rändern zumindest in Teilbereichen zum Aufnahmeauge hin und/oder zum Außenrohr hin umgebördelt. Als zweckmäßig haben sich jeweils drei am Umfang verteilte Abstützungen zum Außenrohr und zum Aufnahmeauge durch Verstemmen erwiesen.

Eine weitere, vorteilhafte Zusatzmaßnahme für die Lagefixierung des Außenrohrs sowohl beim Einpreßvorgang als auch während des Betriebs wird mit den Maßnahmen des Anspruchs 11 angegeben. Dazu sind an der Umfangsfläche des Montagerohrs im Bereich des lagerinnenseitigen Außenrohrrandes Abstützzungen zur Lagerachse hin ausgeklinkt, die das Außenrohr gegen eine Verschiebung zur axialen Lagermitte hin abstützen.

Eine alternative oder zusätzliche Maßnahme zur Verbesserung der Lagefixierung beim Einpreßvorgang und während des Betriebs wird nach Anspruch 12 darin gesehen, daß auf der Umfangsfläche des Außenrohrs eine dünne Gummischicht aufgebracht ist, die die Haftreibung zum Montagerohr hin erhöht.

Anhand eines Ausführungsbeispiels wird die Erfindung mit weiteren Einzelheiten, Merkmalen und Vorteilen näher erläutert.

Es zeigen
- Fig. 1: einen Längsschnitt durch eine Gelenkbuchse im unbelasteten, noch nicht eingepreßten Zustand,
- Fig. 2a: eine vergrößerte Detailansicht eines Schnitts durch die zweiteilige Dichtlippe aus Fig. 1,
- Fig. 2b: eine entsprechende, alternative, einteilige Ausführungsform einer Dichtlippe,
- Fig. 3: einen Längsschnitt durch ein Gelenklager mit montierter Gelenkbuchse entlang der Linie B-B aus Fig. 4 und
- Fig. 4: eine Draufsicht in Axialrichtung auf das Gelenklager nach Fig. 3.

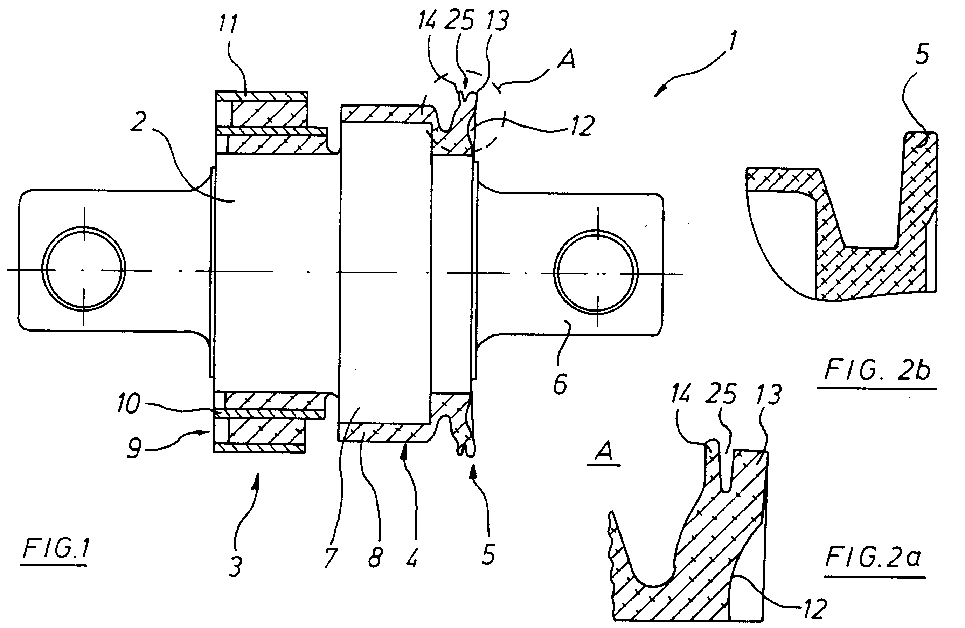

In Fig. 1 ist eine zylindrische Gelenkbuchse als Gummi-Metallteil dargestellt, die aus einem inneren Metallteil 2, einem verdrehbaren Gelenkbereich 3, einem umlaufenden Anschlag 4 und einer Dichtwand 5 besteht.

Das innere Metallteil 2 ist als erstes Lagerteil einer Achslenkerlagerung mit einem Fahrzeugrahmen über Pratzen 6 mit (nicht dargestellten) Schraubenbolzen verbindbar.

Der umlaufende Anschlag ist als umlaufender, metallischer Anschlagring 7 Bestandteil des inneren Metallteils 2, wobei auf dem metallischen Anschlagring 7 eine Anschlag-Gummischicht 8 aufgebracht ist.

Der verdrehbare Gelenkbereich 3 ist so aufgebaut, daß auf dem inneren, zylindrischen Metallteil 2 eine Gummischicht 9 als Gummiring aufvulkanisiert ist. In die Gummischicht 9 ist ein Zwischenblech 10 einvulkanisiert.

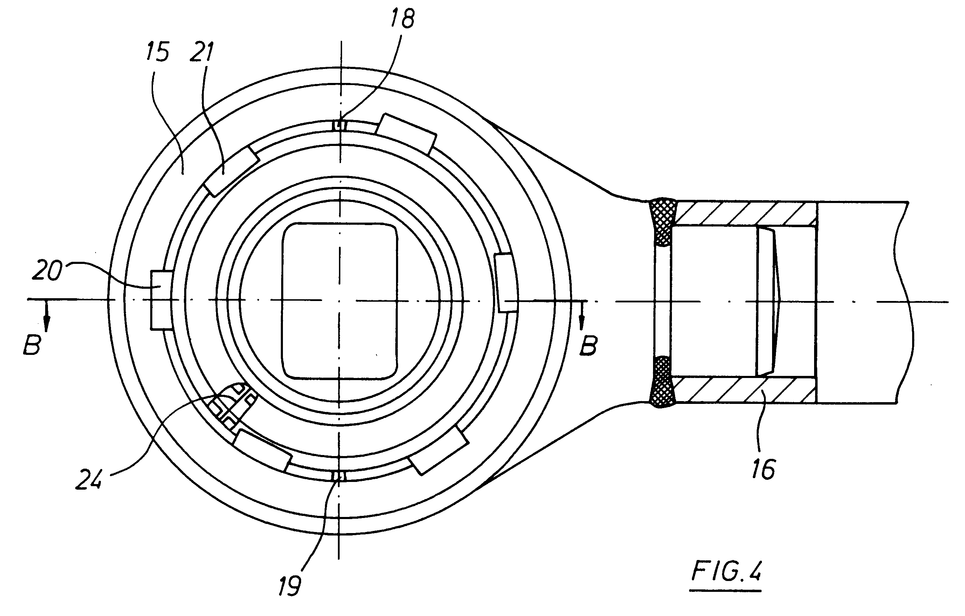

Auf die Gummischicht 9 ist ein Außenrohr 11 aufvulkanisiert, das im nicht eingepreßten Herstellzustand einen (in Fig. 1 nicht eingezeichneten) Längsschlitz aufweist, der sich mit seiner Schlitztiefe weit in die Gummischicht 9 und durch das Zwischenblech 10 hindurch erstreckt (in Fig. 4 ist ein solcher V-förmiger Längsschlitz im geschlossenen Zustand nach dem Einpreßvorgang dargestellt).

Der Durchmesser des Außenrohrs 11 und der ringscheibenförmigen Dichtwand 5 sind etwa gleich groß. Die Dichtwand 5 weist bereits im unbelasteten, noch nicht eingepreßten Zustand im Ringbereich des Gummis eine umlaufende, zur Lagermitte hin gerichtete Wölbung 12 auf. Am Umfangsrand der Dichtwand 5 sind zwei radial abstehende Dichtlippen, eine äußere Dichtlippe 13 und eine innere Dichtlippe 14 angebracht, die durch einen Spalt 25 voneinander getrennt sind. Die äußere Dichtlippe 13 ist dicker als die innere Dichtlippe 14, wobei diese radial weiter vorsteht. Eine vergrößerte Detailansicht des Dichtlippenaufbaus ist in Fig. 2 dargestellt.

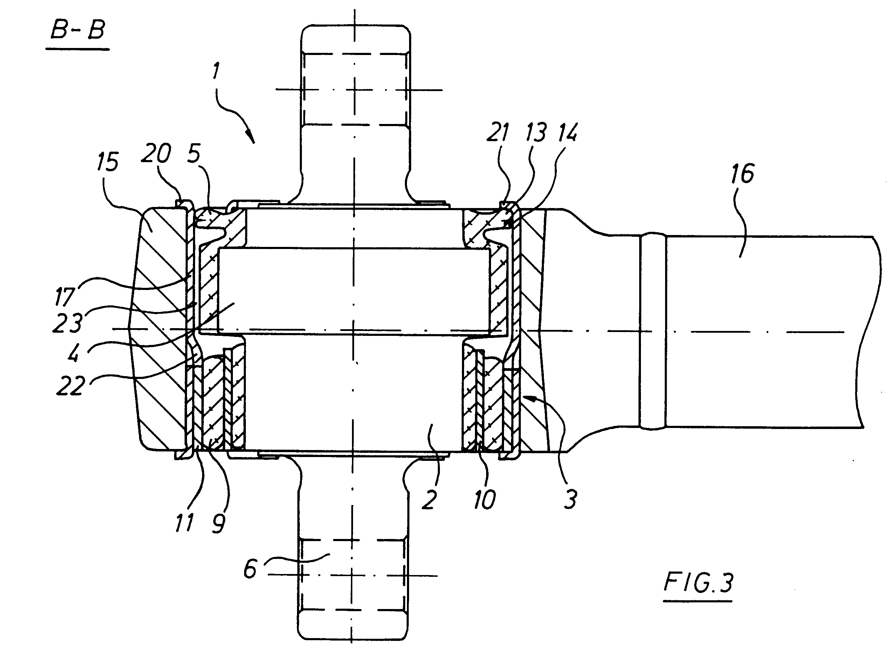

In den Fig. 3 und 4 ist die Gelenkbuchse 1 im montierten Zustand in einem Aufnahmeauge 15 eines Achslenkers 16 dargestellt.

Um eine undefinierte Verschiebung der Gummischicht 9 und des Außenrohrs 11 sowie der Dichtwand 5 beim Einpreßvorgang zu verhindern, ist dazu ein Montagerohr 17 über die gesamte, axiale Länge der Gelenkbuchse 1, nämlich das Außenrohr 11, den Bereich des Anschlags 4 und die Dichtwand 5 gesteckt. Dieses Montagerohr 17 weist einen über die gesamte Länge durchgehenden Montagerohr-Längsschlitz 18 sowie einen weiteren, gegenüberliegenden, sich nur über die halbe Rohrlänge erstreckenden zweiten Schlitz 19 auf. Beide Schlitze 18, 19 werden beim Einpreßvorgang weitgehend geschlossen und liegen im eingebauten Zustand am Fahrzeug so, daß die verbleibenden Schlitzöffnungen 18, 19 vertikal übereinanderliegen, wie dies in Fig. 4 dargestellt ist.

Es ist zweckmäßig, einen Montagerohr-Längsschlitz 18 über die gesamte Länge durchgehend auszubilden, so daß durch diesen Spalt das Rohr in seinem Durchmesser aufgeweitet werden kann. Wenn weitere Längsschlitze 19 vorgesehen sind, sollen sich diese nicht mehr über die gesamte Länge erstrecken, damit das Montagerohr einstückig zusammenhält und nicht in mehrere Teile zerfällt.

Das Montagerohr 17 ist an seinen beiden stirnseitigen Rändern an jeweils drei Stellen mit Nasen 20 zum Aufnahmeauge 15 hin und an weiteren dazu versetzten Stellen mit Nasen 21 zum Außenrohr 11 bzw. zur Dichtwand 5 umgebördelt. Zudem sind an der Umfangsfläche des Montagerohrs 17 im Bereich des lagerinnenseitigen Außenrohrrandes Zungen 22 als Abstützungen für das Außenrohr 11 ausgeklinkt.

Je nach der geometrischen Dimensionierung und den jeweiligen Gegebenheiten können für eine vielstellige Abstützung der Dichtwand 5 eine Vielzahl von Nasen 21 vorgesehen sein. Anstelle der Nasen 21 ist auch ein durchgehend umgebördelter Ring als Abstützung möglich. Da dann keine Nasen 20 gebildet werden, kann das Montagerohr 17 anstelle der Nasen 20 für eine Fixierung im Aufnahmeauge 15 verstemmt werden.

Im eingepreßten Zustand ist die Gummischicht 9 radial vorgespannt, ebenso wie die Dichtwand 5, wobei sich die Dichtlippen 13, 14 an der Montagerohr-Innenseite angelegt haben. Zwischen dem Anschlag 4 und dem Montagerohr 17 verbleibt ein umlaufender Luftspalt 23.

In einem Ausschnitt in Fig. 4 ist zudem der beim Einpressen geschlossene Längsschlitz 24 im Außenrohr 11, der Gummischicht 9 und dem Zwischenblech 10 dargestellt.

Das beschriebene Gelenklager für einen Achslenker 16 hat folgende Funktion:

Beim üblichen Fahrbetrieb ohne größere, radiale Krafteinwirkungen werden Verdrehungen in der Gummischicht 9 molekular aufgenommen, wodurch eine weiche Anbindung mit insbesondere guten, akustischen Eigenschaften erfolgt. Bei größeren, radialen Belastungen mit einem radialen Einfederweg größer als der Luftspalt 23 tritt der Anschlag 4 in Funktion, wodurch das Gelenklager mit guten Führungseigenschaften und stark ansteigender Federkennlinie arbeitet.

Eine Sicherung gegen eine axiale Verschiebung der Gelenkbuchse 1 im Aufnahmeauge 15 wird durch die Nasen 20, 21 und die Zungen 22 erreicht.

Eine Abdichtung gegen schädliche Umwelteinflüsse erfolgt an der einen Seite über die vorgespannte Gummischicht 9 und an der anderen Seite über die Dichtwand 5 bzw. die Dichtlippen 13, 14. Bei kleinen Drehbewegungen werden diese molekular ohne Relativbewegung zwischen den Dichtlippen und dem Montagerohr aufgenommen. Bei größeren Drehbewegungen rutschen die Dichtlippen gegenüber dem Montagerohr durch. Soweit Feuchtigkeit über die Stirnseiten der Schlitze 18 oder 19 (sh. Fig. 4) in den Lagerinneraum eindringen kann, ist eine Entwässerung über den jeweils unten liegenden Schlitz 19 möglich.

## Patentansprüche

1. Gelenklager, insbesondere für einen Achslenker eines Kraftfahrzeugs,
mit einer zylindrischen Gelenkbuchse (1), bestehend aus einem inneren Metallteil (2), das als erstes Lagerteil, insbesondere mit einem Fahrzeugrahmen verbindbar ist, einem Außenrohr (11) und wenigstens einer zwischen innerem Metallteil (2) und Außenrohr (11) festhaftend einvulkanisierten ersten Gummischicht (9), wobei das Außenrohr (11) wenigstens einen Längsschlitz (24) aufweist, der sich mit seiner Schlitztiefe weit in die Gummischicht (9) hinein erstreckt und
mit einem Aufnahmeauge (15) als zweites Lagerteil, das insbesondere mit einem Achslenker verbunden ist, in das die Gelenkbuchse (1) unter radialer Vorspannung eingebracht ist, wobei die Gelenkbuchse (1) mit ihrem im unbelasteten Zustand gegenüber dem Aufnahmeauge (15) größeren Durchmesser unter gleichmäßiger Verringerung dieses Durchmessers in das Aufnahmeauge (15) mit kleinerem Durchmesser in axialer Richtung eingepreßt ist und sich dabei der im unbelasteten Zustand der Gelenkbuchse (1) mit einer entsprechenden Schlitzbreite ausgeführte Längsschlitz (24) geschlossen hat, so daß die erste Gummischicht (9) damit ein geschlossener in einer ersten Radialebene liegender erster Gummiring als Gelenkbuchsenteil (3) mit Tragfunktion ist und aufgrund der Vorspannung in dieser Gummischicht (9) eine feste Verbindung zwischen dem Aufnahmeauge (15) und der Gelenkbuchse (1) hergestellt ist,
mit einem axial gegenüber der ersten Gummischicht (9) versetzten, ringförmig umlaufenden und mit dem inneren Metallteil (2) verbundenen, in einer zweiten Radialebene liegenden Anschlag (4), der so bemessen ist, daß im eingepreßten Zustand gegenüber dem den Anschlag (4) axial überdeckenden Bereich des Aufnahmeauges (15) ein umlaufender Luftspalt (23) verbleibt, so daß bei einem radialen Einfederweg größer als der Luftspalt (23) die Anschlagfunktion auftritt.
mit einem weiteren zweiten Gummiring, der gegenüber dem Anschlag (4) zur axialen Gelenkbuchsenaußenseite versetzt in einer dritten Radialebene liegt und mit dem inneren Metallteil (2) verbunden ist, und
mit einem Montagerohr (17), das über die axiale Länge der Gelenkbuchse (1), nämlich das Außenrohr (11) der ersten Gummischicht (9) und den Bereich des Anschlags (4) gesteckt ist, das wenigstens einen Motagerohr-Längsschlitz (18, 19) aufweist und das mit in das Aufnahmeauge (15) eingepreßt ist, wobei sich der im nicht eingepreßten Zustand offene Montagerohr-Längsschlitz (18, 19) beim Einpressen weitgehend geschlossen hat, wodurch die Gummischicht (9) als Gelenkbuchsenteil (3) mit Tragfunktion vorgespannt ist,
dadurch gekennzeichnet,
daß der zweite Gummiring kein druckvorgespanntes, von einem Außenrohr umgebenes Gelenkbuchsenteil mit Tragfunktion ist, sondern eine ringscheibenförmige, elastische Dichtwand (5) mit randseitig umlaufender Dichtlippe (13, 14) ist, und
daß das Montagerohr (17) zusätzlich auch über die Dichtwand (5) gesteckt ist, wodurch beim Einpressen die Gummidichtwand (5) mit den randseitig umlaufenden Dichtlippen (13, 14) dichtend radial eingespannt ist.

2. Gelenklager nach Anspruch 1, dadurch gekennzeichnet, daß im unbelasteten, noch nicht eingepreßten Zustand der Durchmesser des Außenrohrs (11) und der ringscheibenförmigen Dichtwand (5) etwa gleich groß sind.

3. Gelenklager nach Anspruch 1 oder 2, dadurch gekennzeichnet, daß die Dichtwand (5) im unbelasteten, noch nicht eingepreßten Zustand im Ringbereich des Gummis eine umlaufende Wölbung (12) zur Lagermitte hin aufweist.

4. Gelenklager nach einem der Ansprüche 1 bis 3, dadurch gekennzeichnet, daß am Rand der Dichtwand (5) zwei radial abstehende, axial durch einen umlaufenden Spalt (25) voneinander getrennte Dichtlippen (13, 14) vorgesehen sind.

5. Gelenklager nach Anspruch 4, dadurch gekennzeichnet, daß die erste, äußere Dichtlippe (13) dicker als die zweite, innere Dichtlippe (14) ist und
daß die Dichtwand (5) im Bereich der ersten Dichtlippe (13) einen etwas kleineren, radialen Durchmesser als im Bereich der zweiten Dichtlippe (14) hat, so daß die zweite Dichtlippe (14) im unbelasteten, nicht eingepreßten Zustand über die erste Dichtlippe (13) radial vorsteht.

6. Gelenklager nach einem der Ansprüche 1 bis 5, dadurch gekennzeichnet, daß der Anschlag (4) aus einem gegenüber der Gummischicht (9) härteren Material besteht.

7. Gelenklager nach Anspruch 6, dadurch gekennzeichnet, daß der Anschlag (4) als umlaufender, metallischer Anschlagring (7) ein Bestandteil des inneren Metallteils (2) ist und
daß auf den metallischen Anschlagring (7) eine Anschlag-Gummischicht (8) aufgebracht ist.

8. Gelenklager nach einem der Ansprüche 1 bis 7, dadurch gekennzeichnet, daß in die Gummischicht (9) wenigstens ein Metallblech als Zwischenblech (10) mit einvulkanisiert ist.

9. Gelenklager nach einem der Ansprüche 1 bis 8, dadurch gekennzeichnet, daß die axiale Länge der Gummischicht (9) etwa der axialen Länge des Anschlags (4) entspricht.

10. Gelenklager nach einem der Ansprüche 1 bis 9, dadurch gekennzeichnet, daß das Montagerohr (17) an seinen beiden stirnseitigen Rändern zumindest in Teilbereichen zum Aufnahmeauge (15) hin (Nasen 20) und/oder zum Außenrohr (11) bzw. zur Dichtwand (5) hin (Nasen 21) umgebördelt ist.

11. Gelenklager nach einem der Ansprüche 1 bis 10, dadurch gekennzeichnet, daß an der Umfangsfläche des Montagerohrs (17) im Bereich des lagerinnenseitigen Außenrohrrandes Abstützzungen (Zungen 22) zur Lagerachse hin ausgeklinkt sind, die das Außenrohr (11) gegen eine Verschiebung zur axialen Lagermitte hin abstützen.

12. Gelenklager nach einem der Ansprüche 1 bis 11, dadurch gekennzeichnet, daß auf der Umfangsfläche des Außenrohrs eine dünne Gummischicht angebracht ist.

## Claims

1. A pivoting bearing, in particular for an axle guide of a motor vehicle,
with a cylindrical articulated bush (1) consisting of an inner metal component (2) that can as a first bearing component be connected to a vehicle chassis in particular, an outer tube (11), and at least one first rubber layer (9) inserted by vulcanization with a firmly adhesive effect between the inner metal component (2) and the outer tube (11), wherein the outer tube (11) has at least one longitudinal slot (24) whose slot depth extends well into the rubber layer (9), and
with a receiving opening (15) as a second bearing component which is connected in particular to an axle guide into which the articulated bush (1) is introduced with radial prestressing, wherein the articulated bush (1) is pressed in in the axial direction with its diameter being larger in its unloaded state as compared with the receiving opening (15), into the receiving opening (15) with its smaller diameter with a uniform reduction of this diameter, and the longitudinal slot (24) designed with an appropriate slot width in the unloaded state of the articulated bush (1) has been closed thereby, so that the first rubber layer (9) thereby becomes a closed first rubber ring lying in a first radial plane as the articulated bush component (3) with a load- bearing function, and a firm joint is established in this rubber layer (9) between the receiving opening (15) and the articulated bush (1) because of the prestressing,
with an annular peripheral stop (4) axially offset with respect to the first rubber layer (9), connected to the inner metal component (2) and lying in a second radial plane, which stop is dimensioned in such a way that in the pressed-in state, there remains a peripheral air gap (23) opposite the zone of the receiving opening (15), axially covering the stop (4), so that the stop function operates in the case of a radial spring deflection path that is greater than the air gap (23),
with a further second rubber ring, which lies offset with respect to the stop (4) towards the axial outer side of the articulated bush in a third radial plane and is connected to the inner metal component (2), and
with a mounting tube (17) that is fitted over the axial length of the articulated bush (1), that is to say, the outer tube (11), the first rubber layer (9) and the zone of the stop (4), which has at least one longitudinal mounting tube slot (18, 19) and which is also pressed into the receiving opening (15), in which process the longitudinal mounting tube slot (18, 19) which is open in its nonpressed-in state, has largely closed during the pressing-in action, whereby the rubber layer (9), being the articulated bush component (3) with a load bearing function, is prestressed,
characterized in that
the second rubber ring is not a pressure-prestressed articulated bush component with a loading bearing function surrounded by an outer tube, but an annular disk-shaped elastic sealing wall (5) with a sealing lip (13, 14) peripherally disposed at the edge, and
that the mounting tube (17) is additionally also fitted over the sealing wall (5), whereby the rubber sealing wall (5) with its sealing lip (13, 14) peripherally disposed edgewise is radially held with a sealing effect.

2. A pivoting bearing according to claim 1, characterized in that in the unloaded not yet pressed-in state, the diameter of the outer tube (11) and of the annular sealing wall (5) are approximately of equal size.

3. A pivoting bearing according to claim 1 or 2, characterized in that in the unloaded not yet pressed-in state, the sealing wall (5) has in the annular zone of the rubber a peripheral bulge (12) towards the centre of the bearing.

4. A pivoting bearing according to one of claims 1 to 3, characterized in that at the edge of the sealing wall (5), there are provided two radially projecting sealing lips (13, 14) which are separated from each other by a peripheral gap (25).

5. A pivoting bearing according to claim 4, characterized in that the first outer sealing lip (13) is thicker than the second inner sealing lip (14) and
that in the zone of the first sealing lip (13), the sealing wall (5) has a somewhat smaller radial diameter than in the zone of the second sealing lip (14), so that in the unloaded not yet pressed-in state, the second sealing lip (14) radially projects beyond the first sealing lip (13).

6. A pivoting bearing according to one of claims 1 to 5, characterized in that the stop (4) consists of a harder material as compared with the rubber layer (9).

7. A pivoting bearing according to claim 6, characterized in that, as a peripheral metal stop ring (7), the stop (4) is a component part of the inner metal component (2) and
that a rubber stop layer (8) is deposited on the metal stop ring (7).

8. A pivoting bearing according to one of claims 1 to 7, characterized in that at least one metal plate is also inserted by vulcanization into the rubber layer (9) as an intermediate plate (10).

9. A pivoting bearing according to one of claims 1 to 8, characterized in that the axial length of the rubber layer (9) corresponds approximately to the axial length of the stop (4).

10. A pivoting bearing according to one of claims 1 to 9, characterized in that at its two end edges, the mounting tube (17) is, at least in part zones, flanged over towards the receiving opening (15), (projections (20), and/or towards the outer tube (11) or towards the sealing wall (5) (projections (21).

11. A pivoting bearing according to one of claims 1 to 10, characterized in that at the peripheral face of the mounting tube (17), supports (tongues 22) are notched out towards the bearing axis in the zone of the edge of the outer tube (11) on the internal side of the bearing, which tongues support the outer tube (11) against displacement towards the axial bearing centre.

12. A pivoting bearing according to one of claims 1 to 11, characterized in that a thin rubber layer is applied on the peripheral face of the outer tube (11).

## Revendications

1. Articulation, en particulier pour une belle de liaison d'essieu d'un véhicule à moteur, comprenant :
une douille d'articulation cylindrique (1) composée d'une partie métallique intérieure (2), qui forme une première partie de l'articulation et peut être reliée en particulier au châssis d'un véhicule, d'un tube extérieur (11) et d'au moins une première couche de caoutchouc (9) fixée par vulcanisation, adhérant entre la partie métallique intérieure (2) et le tube extérieur (11), le tube extérieur (11) présentant au moins une fente longitudinale (24) qui s'étend profondément dans la couche de caoutchouc (9), et
un oeillet de logement (15) servant de seconde partie de l'articulation, qui est relié en particulier à une belle de liaison d'essieu et dans lequel la douille d'articulation (1) est introduite sous une précontrainte radiale, la douille d'articulation (1), qui a un diamètre plus grand que l'oeillet de logement (15) à l'état non contraint, étant enfoncée dans le sens axial dans l'oeillet de logement (15) de plus petit diamètre en subissant une réduction uniforme de son diamètre, et la fente longitudinale (24), qui a une largeur appropriée à l'état non contraint de la douille d'articulation (1), étant ainsi fermée, de sorte que la première couche de caoutchouc (9) constitue ainsi un premier anneau de caoutchouc fermé qui est situé dans un premier plan radial et qui forme une partie de douille d'articulation (3) ayant une fonction portante, et qu'une liaison solide est établie, du fait de la précontrainte de cette couche de caoutchouc (9), entre l'oeillet de logement (15) et la douille d'articulation (1),
une butée (4) qui est décalée dans le sens axial par rapport à la première couche de caoutchouc (9), fait le tour de la partie métallique intérieure (2) à la manière d'un anneau et est reliée à celle-ci, est située dans un deuxième plan radial et est dimensionnée de telle sorte qu'à l'état monté, il reste un interstice (23) par rapport à la partie de l'oeillet de logement (15) recouvrant axialement la butée (4), de sorte que la fonction de butée se produit lors d'une course de compression élastique plus grande que l'interstice (23),
un deuxième anneau de caoutchouc qui se trouve dans un troisième plan radial en étant décalé par rapport à la butée (4) en direction du côté extérieur de la douille d'articulation dans le sens axial, et est relié à la partie métallique intérieure (2), et
un tube de montage (17) qui est enfilé par-dessus la longueur axiale de la douille d'articulation (1), autrement dit le tube extérieur (11) de la première couche de caoutchouc (9) et la zone de la butée (4), présente au moins une fente longitudinale (18, 19) et est enfoncé en même temps dans l'oeillet de logement (15), la fente longitudinale (18, 19) du tube de montage, qui était ouverte à l'état non enfoncé du tube, étant en grande partie fermée après l'enfoncement du tube, ce qui précontraint la couche de caoutchouc (9) faisant office de partie de douille d'articulation (3) assurant une fonction portante,
caractérisée en ce que le deuxième anneau de caoutchouc n'est pas une partie de douille d'articulation assurant une fonction portante, précontrainte en pression et entourée d'un tube extérieur, mais constitue une paroi d'étanchéité (5) élastique, en forme de disque annulaire, avec une lèvre d'étanchéité (13, 14) sur son périphérique, et
en ce que le tube de montage (17) est en outre enfilé aussi par-dessus la paroi d'étanchéité (5), de sorte que lors de l'enfoncement, la paroi d'étanchéité (5) en caoutchouc, avec des lèvres d'étanchéité périphériques (14, 15), est serrée dans le sens radial en vue de l'étanchéité.

2. Articulation selon la revendication 1, caractérisée en ce que, dans l'état non contraint avant enfoncement, le diamètre du tube extérieur (11) et celui de la paroi d'étanchéité (5) en forme de disque annulaire sont approximativement égaux.

3. Articulation selon la revendication 1 ou 2, caractérisée en ce que la paroi d'étanchéité (5) présente, dans l'état non contraint avant enfoncement, dans sa partie annulaire en caoutchouc, une moulure circulaire (12) en creux vers le milieu de l'articulation.

4. Articulation selon l'une quelconque des revendications 1 à 3, caractérisée en ce qu'il est prévu au bord de la paroi d'étanchéité (5) deux lèvres d'étanchéité (13, 14) faisant saillie dans le sens radial et séparées l'une de l'autre dans le sens axial par une fente périphérique (25).

5. Articulation selon la revendication 4, caractérisée en ce que la première lèvre d'étanchéité extérieure (13) est plus épaisse que la seconde lèvre d'étanchéité intérieure (14) et
en ce que la paroi d'étanchéité (5) a au niveau de la première lèvre d'étanchéité (13) un diamètre radial légèrement plus petit qu'au niveau de la seconde lèvre d'étanchéité (14), de sorte que la seconde lèvre d'étanchéité (14) fait saillie dans le sens radial au-delà de la première lèvre d'étanchéité (13) dans l'état non contraint avant enfoncement.

6. Articulation selon l'une quelconque des revendications 1 à 5, caractérisée en ce que la butée (4) est en un matériau plus dur que la couche de caoutchouc (9).

7. Articulation selon la revendication 6, caractérisée en ce que la butée (4) est conçue comme un anneau de butée métallique périphérique (7) faisant partie de la partie métallique intérieure (2), et
en ce qu'une couche de caoutchouc de butée (8) est appliquée sur l'anneau de butée métallique (7).

8. Articulation selon l'une quelconque des revendications 1 à 7, caractérisée en ce qu'au moins une tôle métallique est intégrée et fixée par vulcanisation dans la couche de caoutchouc (9) pour former une tôle intercalaire (10).

9. Articulation selon l'une quelconque des revendications 1 à 8, caractérisée en ce que la longueur axiale de la couche de caoutchouc (9) correspond approximativement à la longueur axiale de la butée (4).

10. Articulation selon l'une quelconque des revendications 1 à 9, caractérisée en ce que le tube de montage (17) comporte, à ses deux extrêmités frontales, un bord qui est au moins en partie rabattu en direction de l'oeillet de logement (15) (talons 20) et/ou du tube extérieur (11) ou de la paroi d'étanchéité (5) (talons 21).

11. Articulation selon l'une quelconque des revendications 1 à 10, caractérisée en ce que des appuis (languettes 22) maintenant le tube extérieur (11) en vue d'en empêcher le déplacement vers le milieu axial de l'articulation, sont découpés dans la surface périphérique du tube de montage (17), dans la région du bord du tube extérieur situé du côté interne de l'articulation, et repoussés en direction de l'axe de l'articulation.

12. Articulation selon l'une quelconque des revendications 1 à 11, caractérisée en ce qu'une fine couche de caoutchouc est appliquée sur la surface périphérique du tube extérieur.
